# EUROPEAN PATENT APPLICATION

(11) **EP 2 434 729 A2**
(43) Date of publication of application: **28.03.2012**
(21) Application number: 11182968.5
(22) Date of filing: 27.09.2011
(51) Int. Cl.: H04L 29/08, G06F 11/18, G06F 11/20

(54) **Method for providing access to data items from a distributed storage system**

(30) Priority: 28.09.2010 GB 1016308
(71) Applicant: Metaswitch Networks Ltd, Enfield, Middlesex EN2 6BQ (GB)
(72) Inventor: Evans, Michael Jeffrey, Enfield, Middlesex EN2 6BQ (GB)
(74) Representative: Spaargaren, Jerome

(57) **Abstract**

A method for providing access to data items from a distributed storage system comprising multiple storage nodes. Each data item is replicated across a plurality of storage nodes.

Data items are read from the distributed storage system by selecting between a first reading mode, comprising attempting to read the data item from a set of the storage nodes to check for data item consistency across at least a quorum of the set of nodes, and a second reading mode, comprising reading the data item from at least one of the storage nodes.

The reading mode is selected according to at least one detected characteristic of system status of the distributed storage system. The second reading mode is selected when the detected characteristic indicates a higher likelihood of data item consistency, and the first reading mode is selected when the detected characteristic indicates a lower likelihood of data item consistency.

## Description

### Field of the Invention

The present invention relates to a method for providing access to data items from a distributed storage system.

### Background of the Invention

Distributed storage systems are known that comprise a plurality of nodes that redundantly store a plurality of data items. These systems are configured in order to allow the stored data items to be accessed in spite of failures in one or more of the nodes, and to ensure that failures of the nodes do not result in data inconsistency across the redundant copies of data items.

It is known however that it is not possible to build a distributed storage system providing both consistency across redundantly stored data items and high availability whilst also being tolerant of temporary partitions between the nodes of the system, as there are trade-offs between these three requirements.

The Paxos distributed consensus algorithm provides a method way of ensuring consistency in a distributed storage system by requiring consensus between a quorum of nodes when updating data items and by processing reads using a quorum of nodes. The algorithm can guarantee a high degree of consistency as successive quorums must have at least one member in common, however there is a high overhead when performing reads.

The present invention aims to provide an improved method for providing access to data items in a distributed storage system.

### Summary of the Invention

In accordance with one aspect of the disclosure, there is provided a method for providing access to data items from a distributed storage system comprising multiple storage nodes connected via a data communications network according to the appended claims. Preferred features of the method are set out in the dependent claims.

The embodiments described herein are concerned with providing a method for providing access to data items from a distributed storage system comprising multiple storage nodes connected via a data communications network, each said data item being replicated across a plurality of said storage nodes,
wherein the method comprises reading data items from said distributed storage system by selecting between a first and a second reading mode, said first reading mode comprising attempting to read the data item from a set of nodes comprising a plurality of said storage nodes to check for data item consistency across at least a quorum of said set of nodes and said second reading mode comprising reading the data item from at least one of said storage nodes, the method comprising:
receiving a request to retrieve the data item at a given node;
selecting, according to at least one detected characteristic of system status of the distributed storage system, which of the first and second reading modes to use in the retrieval of the data item, wherein said selection comprises selecting the second reading mode when the at least one detected characteristic of system status indicates a higher likelihood of data item consistency, and selecting the first reading mode when the at least one detected characteristic of system status indicates a lower likelihood of data item consistency;
reading the data item from the distributed storage system using the selected reading mode; and
transmitting the data item read by the selected reading mode in response to said request to retrieve the data item.

By selecting, according to at least one detected system characteristic of system status of the distributed storage system, which of the first and second reading modes to use in the retrieval of a data item from a distributed storage system, embodiments of the present invention are able to take advantage of detected characteristics of system status of the distributed storage system so that a second reading mode may be used to read the data item from the distributed storage system when a higher likelihood of data item consistency is detected, whereas a first reading mode may be used to read the data item from the distributed storage system when a lower likelihood of data item consistency is detected, thereby improving performance of the system as a whole.

Preferably, the first reading mode comprises reading the data item from a first number of the plurality of nodes, whilst the second reading mode comprises reading the data item from a second number of the plurality of nodes, where the second number is less than said first number.

The first reading mode may comprise attempting to read the data item from a set of nodes comprising a plurality of nodes to check for data item consistency across at least a quorum of the set of nodes.

The second reading mode may comprise reading the data item from only one of the plurality of nodes. The node that the data item may be read from in the second reading mode may be a node that is currently responsible for controlling updates to the data item stored at each member in the set of nodes that would be read in the first read process.

In this way a more efficient reading mode (the second reading mode) may be used when a higher likelihood of data item consistency is detected, and a less efficient but more robust reading mode (the first reading mode) that is able to handle some data item inconsistency may be used when a lower likelihood of data item consistency is detected.

In some embodiments the above method may include:
monitoring for an indication that a locally-stored data item may be out of date at said given node;
detecting an out-of-date characteristic indicating that said locally-stored data item may not be a latest version of the data item;
including said out-of-date characteristic in said at least one detected characteristic of system status of the distributed storage system.

The monitoring may include monitoring for information, which may include one or more of: whether the given node is in a recently-failed state, whether the given node has been unable to make contact with one or more nodes in said set of nodes, and whether an instance of updating relating to said data item has been completed unexpectedly.

In the case of monitoring whether an instance of updating relating to said data item has been completed unexpectedly, this may include monitoring whether the given node has received a message from another node indicating that an update relating to the data item has completed unexpectedly, such as a message indicating that an update unknown to the given node has been agreed by other nodes.

Characteristics of system status of the distributed storage system that may be detected in order to allow the selection of a read mode may include a leadership issue characteristic that indicates whether or not a first node in the plurality of nodes believes it is currently a leader node and is thus currently responsible for updates to the data item, an agreement issue characteristic that indicates whether or not an update (such as the most recently requested update) for the data item has been agreed amongst a set of nodes in the plurality of nodes, and an out-of-date characteristic for the data item that indicates whether any information has been received by the first node that may indicate that a copy of a data item locally-stored at the first node may be out of date.

In accordance with another aspect of the disclosure, there is provided a method for providing backup access to data items from a storage node of a distributed storage system comprising multiple storage nodes connected via a data communications network, each said data item being replicated across a plurality of said storage nodes,
wherein the method comprises:
detecting that said storage node has been disconnected from other storage nodes in a set of nodes, comprising a plurality of said storage nodes, across which data items have been replicated;
querying one or more members of said set of storage nodes to identify a current leader node which is responsible for coordinating updates to said set of nodes;
determining one or more data items in relation to which said storage node may have missed an update to said set of nodes; and
in response to said determination, to query one or more of said set of nodes to update a locally-stored data item to ensure consistency of said locally-stored data item with at least a quorum of said set of nodes.

By querying actively to determine a current leader node, then determining one or more data items in relation to which the storage node may have missed an update, an inconsistency in the locally-stored data item may be corrected pro-actively following a failure such as the storage node being disconnected from other storage nodes in a set of nodes. The inconsistency may be corrected without needing to passively monitor and wait for other messages relating to updates to the data item transmitted between nodes in the distributed storage system. In this way the consistency of data items that are rarely updated may be maintained more reliably.

In accordance with another aspect of the disclosure, there is provided a method for providing backup access to data items from a storage node of a distributed storage system comprising multiple storage nodes connected via a data communications network, each said data item being replicated across a plurality of said storage nodes,
wherein the method comprises:
detecting that the storage node has failed and restarted;
querying one or more members of said set of storage nodes to identify a current leader node which is responsible for coordinating updates to said set of nodes;
determining an identifier of a point in a sequence of distributed storage system actions being coordinated by said current leader node, and participating in read and/or write actions instructed by said leader node which are beyond said point in said sequence.

By querying actively to determine the current leader node, then determining an identifier of a point from which to restart participation according to the above method, a node that is recovering from a failure such as being disconnected from other storage nodes in a set of nodes is able to proactively determine from which point it may restart participating in read and/or write actions instructed by said leader node, without needing to wait for stabilisation of older updates transmitted between nodes in the distributed storage system.

Further features and advantages of the invention will become apparent from the following description of preferred embodiments of the invention, given by way of example only, which is made with reference to the accompanying drawings.

### Brief Description of the Drawings

Figure 1 schematically illustrates the components of a distributed storage system, according to an embodiment of the invention.
Figure 2 schematically illustrates the components of a node of the distributed storage system of Figure 1, according to an embodiment of the invention.
Figure 3 illustrates a sequence of interactions within a distributed storage system, according to the prior art.
Figure 4 illustrates the steps performed by a node of the distributed storage system of Figure 1 in order to write a data item, according to an embodiment of the invention.
Figure 5 illustrates the steps performed by a node of the distributed storage system of Figure 1 in order to read a data item, according to an embodiment of the invention.
Figure 6 illustrates the steps performed by a node of the distributed storage system of Figure 1 in order to re-synchronise data items following a failure, according to an embodiment of the invention.
Figure 7 illustrates the steps performed by a node of the distributed storage system of Figure 1 in order to determine when it has re-synchronised with other nodes following a failure, according to the present invention.

### Detailed Description of the Invention

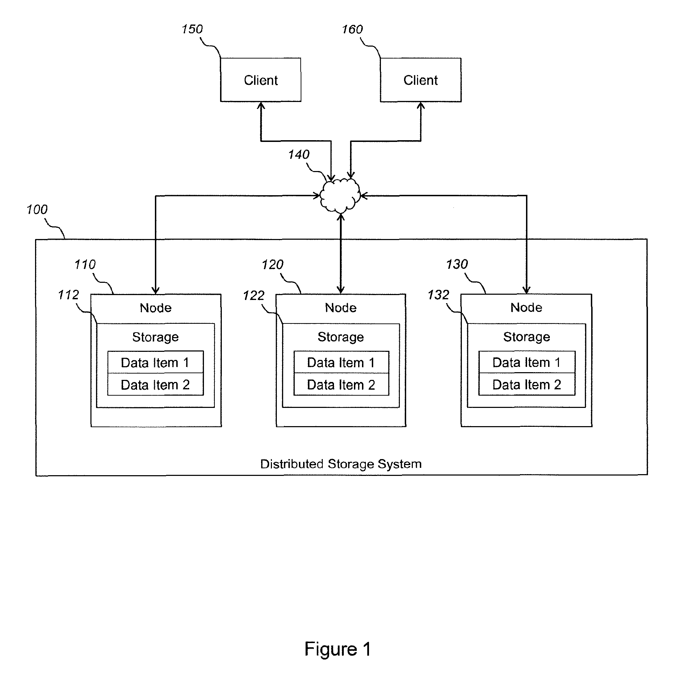

Figure 1 schematically illustrates the components of a distributed storage system 100 connected to a number of clients 150, 160, according to an embodiment of the present invention.

The distributed storage system 100 includes a plurality of nodes including nodes 110, 120 and 130. Each of the nodes of the distributed storage system 100 comprises storage means (e.g. 112, 114, 116) for storing one or more data items. In a preferred embodiment of the invention the same data items are replicated in the storage of every node of the distributed storage system 100. For example, data item 1 and data item 2 are stored at each of nodes 110, 120 and 130.

The nodes of the distributed storage system 100 may communicate via one or more communications networks 140. A plurality of clients including clients 150 and 160 may request to access data stored within the distributed storage system 100 (such as data items 1 and 2) via the one or more communications networks 140. The nodes of the distributed storage system 100 may read and/or write data (such as data items 1 and 2) in response to these requests and return results to the clients 150 and 160 if necessary.

The one or more communications networks 140 may include an internal communications network such as a local area network that is used to connect some of the nodes of the distributed storage system 100 and/or some of the clients. Additionally or alternatively some of the nodes of the distributed storage system 100 may be connected via one or more communications networks external to the distributed storage system 100, which may include communications networks such as the Internet.

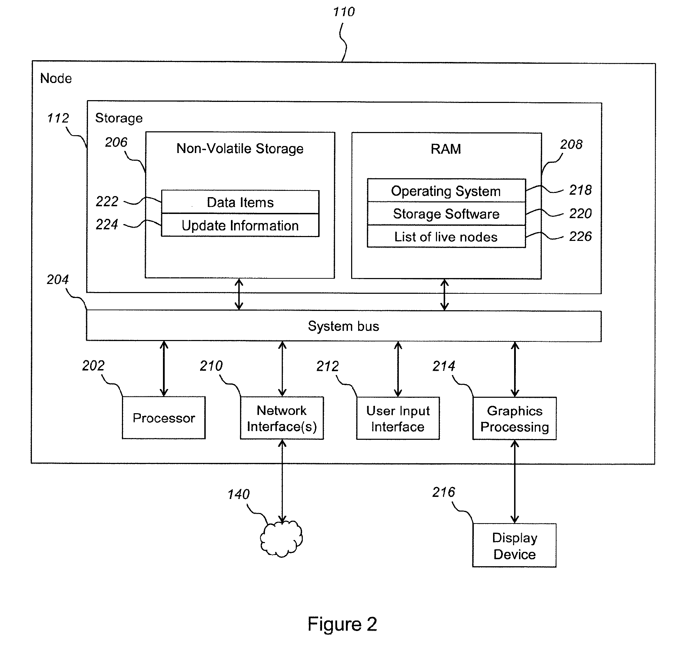

Figure 2 schematically illustrates the components of a node 110 that is one of the plurality of nodes of the distributed storage system 100, according to an embodiment of the present invention. The node 110 may be a computer server, desktop computer, or similar. The node 110 includes a processor 202 that is able to transmit control messages to, receive status information from, and transmit data to and from components within the node 110 that are connected to a system bus 204, where these components include a non-volatile storage device 206, random access memory 208, and network interface 210. Components within the node 110 that are connected to the system bus 204 may also include a user input interface 212 and graphics processing component 214.

The processor 202, which in this embodiment is a microprocessor, processes instructions stored in the random access memory (RAM) 208 that have been loaded from the non-volatile storage device 206 which could be for example a flash memory or a hard disk drive. These instructions are in the form of computer software in the form of one or more programs that implement an operating system 218 and a storage program 220.

The RAM 208 and non-volatile storage 206 form at least part of the storage means 112 of the node 110. The storage means 112 is used by programs running on the processor 202 as a means of storing and accessing data in the form of electronic signals, where the data is used during the execution of the programs. This data includes data items 222 stored for the distributed storage system 100 and update information 224 in relation to the data items, both of which are preferably held in non-volatile storage 206. This data also includes a list of live nodes 226 that lists those nodes that node 110 is currently able to communicate with, and which is preferably stored in RAM 208.

The operating system 218 is computer software in the form of a program or set of programs whose instructions are loaded from non-volatile storage 206 by the processor 202 and executed when the node 110 is turned on. The operating system 218 may start further programs e.g. 220 automatically. The operating system 218 enables the sharing of the processing power provided by the processor 202 between the programs running on the processor 202.

The operating system 218 may provide a file system for storing, modifying and accessing files held in non-volatile storage 206. This file system may be accessible to other programs running on the processor 202 via the programmatic interface provided by the operating system 218.

The node 110 also includes a network interface 210 (or a plurality of such interfaces) that allows programs running on the processor 202 to transmit and receive data to and from a number of other devices and systems via the one or more communications networks 140. The network interface 210 (or the plurality of such interfaces) may include a modem and/or an Ethernet card or interface for use with corresponding communications networks 140 such as the Internet and/or a private data communications network. The operating system 218 may include a networking program that allows communication between programs running on the processor 210 and external devices via the network interface 210 and one or more communications networks.

The node 110 may normally be configured to operate without the need for direct control of its components or programs by (for example) a server administrator, however the node 110 may nevertheless include a user input interface 212 and graphics processing device 214 to allow control of the node 110 when necessary. The user input interface 212 and graphics processing component may be connected to one or more input devices (not shown) and a display device 216, respectively, to allow administration of the node 110. The graphics processing component 214 is able to render graphics in accordance with commands made by programs running on the processor 202 and output these to display device 216, which may be a computer monitor. Programs running on the processor 202 can process user input obtained by the user input interface 212 in response to user input received from a user input device or devices (not shown), which may include a keyboard, mouse, and/or touch-screen interface.

Each of the clients (e.g. 150, 160) may also be a computing device such as a computer server, desktop computer, smartphone, a personal digital assistant (PDA), an e-reader, a tablet computer such as an Apple iPad, etc. Each of the clients may include components such as a processor, RAM, non-volatile storage, network interface, user input interface and graphics processing component that are each connected to a system bus. Each of the clients may be connected to one or more communications networks 140, and may each incorporate or be connected to a display and/or one or more input devices. The clients may be configured to execute one or more computer programs including a distributed storage system access program that enables them to request access to data items stored by the distributed storage system 100.

As summarised above, the distributed storage system 100 is arranged to store a plurality of data items for access by a plurality of clients. Each data item may be redundantly stored by every node of the distributed storage system 100 in order to allow the data item to be accessed by a client (e.g. 150), even if some of those nodes fail or if one or more communications links fail.

The distributed storage system 100 may define a ranking that determines an ordering of the plurality of nodes.

Each client (e.g. 150, 160) of the distributed storage system 100 may be configured to transmit read and write requests relating to data items to the first node in this ranking. The first node will typically be a leader node, as is described in further detail below.

The ranking may be known or passed to clients (e.g. 150, 160) so that should the first node (or second or third node, etc.) in the ranking fail or communication with it be lost, each client may then transmit read and write requests to the second node (or third or fourth node, etc.) in the ranking so that those requests may be processed by the distributed storage system 100. This second node (or third or fourth node, etc.) in the ranking may then become a leader node.

The distributed storage system 100 implements a method for distributed storage that ensures that data stored remains consistent or eventually becomes consistent in spite of failures in the distributed storage system 100 or the communications networks 140. Such a method may be implemented by the storage programs (e.g. 220) running at each node of the distributed storage system 100. The storage programs of the nodes of the distributed storage system 100 may communicate with each other via the communications networks 140 using a plurality of message as described in greater detail below, in order to implement such a method.

In a preferred embodiment of the invention the storage program 220 may incorporate a modified version of the Paxos algorithm for implementing a fault-tolerant distributed storage system, as described in greater detail below. In particular, a modified version of the the Multi-Paxos algorithm (also known as the Paxos State Machine) may preferably be incorporated into the storage program 220.

The Multi-Paxos algorithm, described in (for example) "Paxos made simple", Leslie Lamport, ACM SIGACT 2001, ensures that each update to data items stored at a plurality of nodes is only accepted on the basis of a consensus between a number of those nodes. This allows nodes implementing the Multi-Paxos algorithm to ensure that consistency is maintained in a distributed storage system.

In summary, the Multi-Paxos algorithm operates by allowing a plurality of nodes to elect a leader node that controls access to one or more data items. The leader node ensures that updates to data items may only be accepted by the distributed storage system once a majority of the nodes have reached a consensus indicating that the update should be accepted. Similarly, the leader ensures that consistent data is read for a data item by the nodes reaching a consensus on the current value of the data item before that value is transmitted to a client.

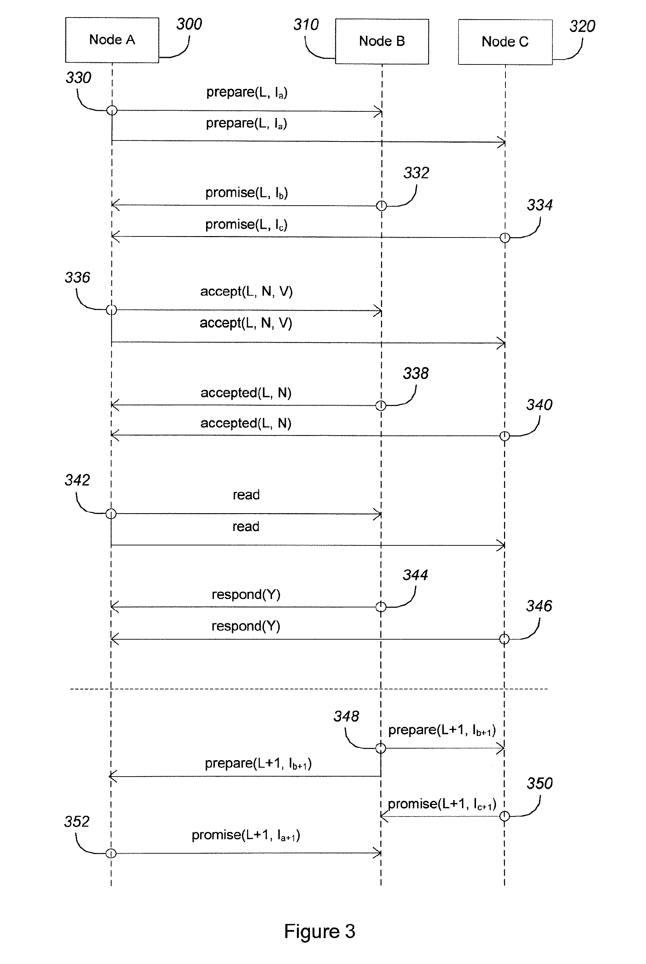

Figure 3 illustrates a sequence of interactions within a distributed storage system comprised of three nodes (node A 300, node B 310 and node C 320) that store a data item, according to the Multi-Paxos algorithm.

Initially, node A 300 attempts to be elected as the leader node of the distributed storage system by transmitting a prepare message to each of the other nodes (step 330). The prepare message includes a leadership round number L that identifies the leadership proposal of node A 300 and a set *Iₐ* of one or more processing instance numbers that indicate the next Multi-Paxos processing instances that node A 300 believes have not yet been executed. The set *Iₐ* of one or more processing instance numbers may for example indicate that node A 300 believes that processing instance numbers N to infinity have not yet been executed.

In response to receipt of the prepare message, node B 310 will check that it has not already received a prepare message that included a leadership round number greater than *L*, as if it had the node that sent that prepare message would take priority in becoming leader node. If it has not received a prepare message that included a leadership round number greater than *L*, node B 310 will respond by transmitting a promise message to node A 300 that includes the leadership round number *L* (step 332). The promise message also includes a set *I_{b}* of the processing instance numbers, according to node B 300, that have not yet been executed and/or those that are in the process of being executed (including any updates already accepted for these instance numbers and the corresponding leadership round number used for those updates). This promise message indicates that node B 310 accepts node A 300 as the current leader node and that node B 310 will not accept any more processing requests in relation to leadership round numbers less than *L*. If instead node B 310 had already received a prepare message with a leadership round number greater than *L*, it will instead respond with a reject message to node A 300.

When a quorum of more than half of the nodes of the distributed storage system have promised to accept node A 300 as the current leader node, node A 300 may begin processing updates transmitted to the distributed processing system. Thus when node A 300 receives a promise message from node B 310 in step 332 above, a quorum of nodes (including node A 300) have accepted node A 300 as the current leader node. Node C 320 may later respond with a similar promise message to node A 300 (step 334).

As the current leader node, node A 300 must complete any processing instances that were already being executed when node A 300 became leader. Node A 300 may detect processing instances that were already being executed using the sets of processing numbers (e.g. *I_{b}*) included in the promise messages sent from other nodes. Node A 300 may then transmit accept messages and/or receive accepted messages in order to complete the processing instances detected as already being executed when node A 300 became leader.

Leader node A 300 also begins processing new requests transmitted to the distributed processing system. Each request issued to the distributed storage system may relate to one of a plurality of data items stored by the system. Node A 300 may receive a request from a client to update a data item with the value *V*, and in response it will transmit an accept message to each of the other nodes (step 336). The accept message includes the leadership round number *L*, a processing instance number *N* that identifies this update, an indication of the data item that is to be updated, and the value *V* that the data item is to be updated with.

In response to receipt of the accept message, node B 310 will check that it believes that node A 300 is still the leader node by checking that node B 310 has not already received any prepare messages that included a leadership round number greater than *L*. If it has not, node B 310 will respond by transmitting an accepted message to node A 300 that includes leadership round number *L* and processing instance number *N* (step 338). This accepted message indicates that node B 310 is prepared to accept the update value *V* in processing instance *N*.

When a quorum of more than half of the nodes of the distributed storage system have accepted the proposed update value *V* in processing instance number *N*, node A 300 determines that update value V has been accepted as the new value for the data item. Thus when node A 300 receives an accepted message from node B 310 in step 336 above, a quorum of nodes (including node A 300) have accepted the proposed update value *V* in processing instance number *N*, and in response node A 300 permanently stores update value *V* for the data item. The leader node must then inform the other nodes of the acceptance of update value *V* so that they can permanently store updated value V for the data item. Node C 320 may later respond with an accepted message similar to that sent by node B 310 (step 340).

Node A 300 may receive a request from a client to read a data item, and in response it will transmit a read message to each of the other nodes (step 342). The read message includes an indication of the data item that is to be read.

In response to receipt of the read message, node B 310 will respond by transmitting the value of the data item that it has most recently accepted (step 344).

If a quorum of more than half of the nodes of the distributed storage system respond to the read message with the same value Y for the data item, node A 300 determines that *Y* is the current value of the data item. Thus if node A 300 receives value *Y* of the data item from node B 310 in step 344 above (step 344), and if *Y* is the value of data most recently accepted by node A 300, a quorum of nodes (including node A 300) have indicated that the value of the data item is *V*, and node A 300 may thus respond to the client's read request with value *Y*. Node C 320 may later respond with a similar response to node A 300 (step 346).

Node A 300 may then process further reads and updates transmitted to the distributed processing system. Every time node A 300 processes a new update, it will transmit accept messages to the other nodes as in step 336 above. Each set of accept messages transmitted for an update will be given a new processing instance number by node A 300, for example, the update after the one processed using processing instance number *N* will be given processing instance number *N* + 1, the update after that will be given processing instance number *N* + 2, etc.

Once a first leader node has been elected in a distributed storage system implementing the Multi-Paxos algorithm, other nodes may attempt to elect themselves as the leader node if the first leader node fails or if communication with the first leader node is lost.

For example, node B 310 may later attempt to elect itself as the leader node following a failure at node A 300 by transmitting a prepare message to each of the other nodes (step 348). The prepare message includes leadership round number *L* + 1 that identifies the leadership proposal of node B 310, and a set *I_{b+1}* of one or more processing instance numbers that indicate the next Multi-Paxos processing instances that node B 310 believes have not yet been executed. Set *I_{b+1}* may indicate that node B 310 believes that processing instance numbers *N* + 2 to infinity have not yet been executed, as in this example node A 300 also executed an update with processing instance number *N* + 1 before failing. In response to receipt of the election message, nodes C 320 and A 300 will check that they have not already received a prepare message that included a leadership round number greater than *L* + 1 before respond by transmitting promise messages to node B 310 (steps 350 and 352).

In situations where the leader node fails, it is possible for two or more nodes to attempt to elect themselves as the leader node. In such situations, the various leader candidates will send promise messages with the same processing instance numbers, but with increasing leadership round numbers until one of the candidates receives a quorum of promise messages. In contrast, when there is no leadership conflict the leadership round number does not change (as one node remains leader node), but the processing instance number is increased by one for each successive set of accept messages.

By operating according to the steps above Multi-Paxos based distributed storage systems may service requests from clients despite failures, provided that a quorum of more than half of the nodes of the system are able to communicate with each other. Additionally data items that are stored by the distributed storage system will remain consistent, as at least one node will be common to each successive quorum used to process requests. However if a group of one or more nodes cannot communicate with a quorum of the plurality of nodes, that group will no longer be able to service requests from clients.

The present invention includes a modified version of the Multi-Paxos algorithm summarised above. In the present invention, leader nodes are elected as in the Multi-Paxos algorithm, and the leader nodes control updates and reads as in the Multi-Paxos algorithm. The present invention also includes modifications to the Multi-Paxos algorithm in order to increase the read throughput of the system and to increase the availability of the system in the event of failures at some of the nodes of a distributed storage system.

As is explained in further detail below, the present invention allows a node to service requests to clients even if it cannot communicate with a quorum of the plurality of nodes of the distributed storage system 100. The present invention also allows read requests to be serviced without reading a data item from a quorum of the plurality of nodes, in dependence on at least one detected characteristic of system status of the distributed storage system.

The modifications to the Multi-Paxos algorithm of the present invention include modified methods for reading and writing data items and a method for re-synchronising nodes following a failure or a loss of communication with other nodes, each of which will be described in greater detail below.

In order to provide these features each node (e.g. 110) maintains a list of live nodes 226 that consists of the nodes that it is currently able to communicate with.

The list of live nodes 226 may be updated by a node based on whether messages it sends to other nodes are received or not. For example, if a first node does not receive an acknowledgement and/or a response following a message sent to a second node by the first node, the first node may determine that it cannot currently contact the second node and may adjust its list of live nodes 226 as a result.

Additionally and/or alternatively, a node may transmit to other nodes its list of live nodes 226 and/or changes to its list of live nodes 226. Lists of live nodes and/or changes to those lists may be transmitted between nodes using a gossip based algorithm, and/or via broadcast to all nodes.

Another alternative to updating the list of live nodes 226 is to have each node periodically send keepalive messages to the other nodes. If a first node has not received a keepalive from a second node for a sufficiently long time it can assume that the second node has either failed or there is a network failure preventing the two nodes from communicating.

In contrast to the Multi-Paxos algorithm, the present invention allows a group of nodes that are unable to communicate with a quorum of the plurality of nodes to process requests from clients. As is described in greater detail below, such a group of one or more nodes may elect a leader from amongst the nodes in the group, and that leader may then process requests from clients for that group of nodes.

Such a configuration allows the distributed storage system to maintain availability in situations where node failures and/or communications failures would cause a Multi-Paxos system to fail to service any requests. However, situations may arise where two or more groups of nodes within the plurality of nodes that are unable to communicate with each other store different updates for the same data item. The present invention is able to recover from such data inconsistencies using the read method and the re-synchronisation methods described in further detail below.

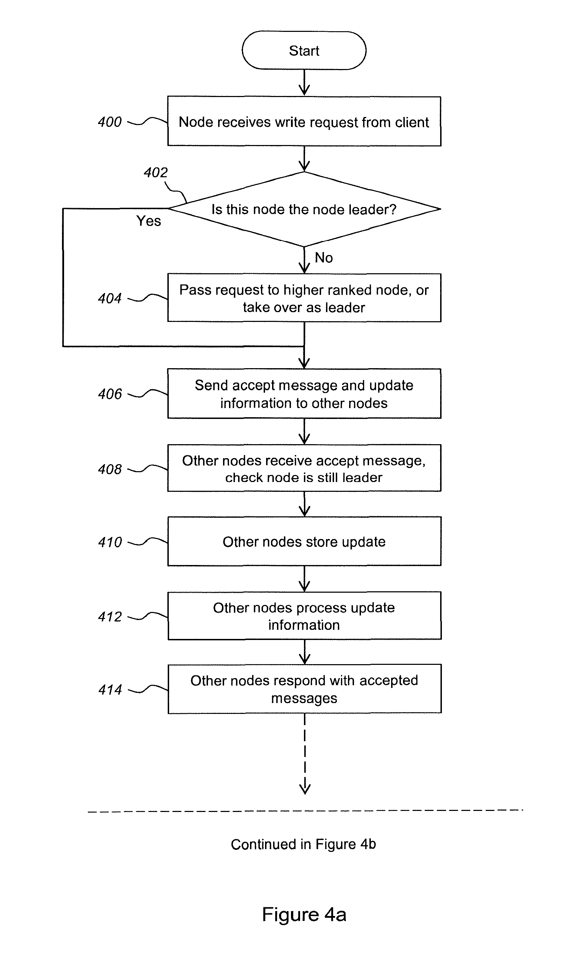

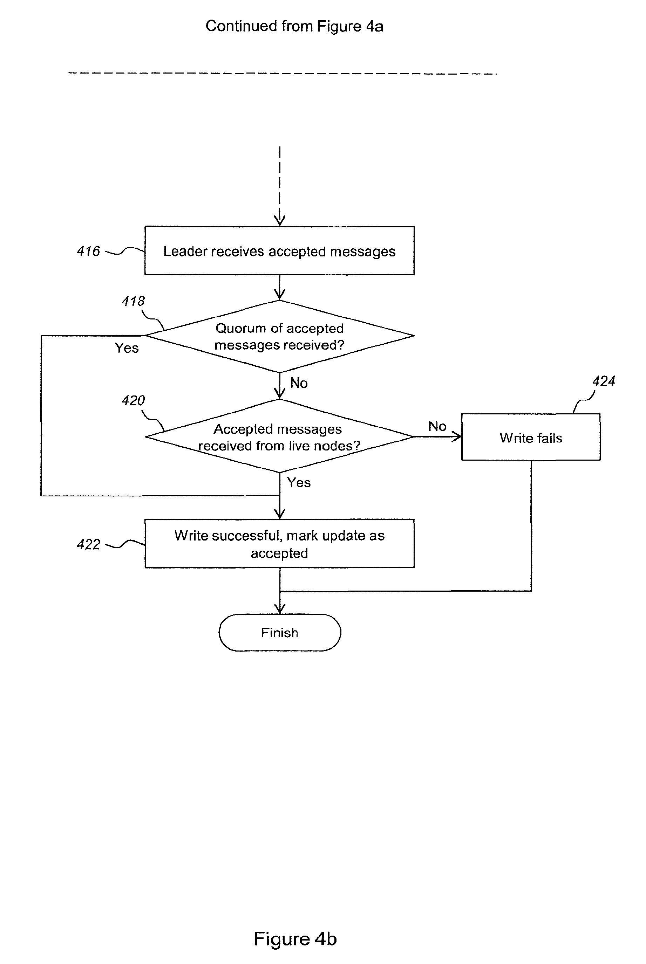

Figure 4 illustrates the steps performed by a node (e.g. 110) of the distributed storage system 100 in order to write a data item in response to a request from a client (e.g. 150), according to an embodiment of the present invention.

Initially the node 110 receives a request from a client 150 to write update value *U* to a data item (step 400). Each request issued to the distributed storage system 100 relates to one of the plurality of data items stored by the system, so the request therefore includes an indication of the data item to be modified. This indication may be in the form of a file name or a unique identifier that identifies the data item to the distributed storage system 100.

In response to receiving the request, the node 110 will check whether it believes it is currently a leader node (step 402). The node 110 will believe it is the current leader if it has sent prepare messages to the other nodes in the plurality of nodes, subsequently received promise messages from at least all the nodes in its list of live nodes 226 (thus becoming the leader of at least the nodes in the list of live nodes 226), and has not since received any leadership configuration messages from other nodes that indicate that another node has since become or attempted to become leader.

Leadership configuration messages that may indicate that another node has become or attempted to become leader since node 110 became leader include a prepare message transmitted by another node attempting to become leader (e.g. as transmitted in step 330 above), or a request from another node that node 110 should accept an update (which would indicate that the other node believes it is a leader), or a message from another node indicating that an update unknown to the node 110 has been agreed by other nodes.

If the node 110 receives a write request when it is not the current leader node it will attempt to pass the write request to a higher ranking node, or will take over leadership if it cannot pass the write request (step 404). The node first checks its list of live nodes 226 to determine whether there is another node that has a higher ranking than node 110 that is currently contactable, and if so node 110 passes the request to that node (which hopefully is either already the leader node or will in response to receiving the request will take over as leader node). Otherwise if there is no higher ranking node that is contactable node 110 will attempt become the leader node.

Node 110 will attempt to become the leader node (if necessary) according to the method of step 330 summarised above, except that if node 110 detects from its list of live nodes 226 that it is not able to contact a quorum of the plurality of nodes, it may detect that it has become the leader node of the nodes in its list of live nodes 226 once it has received a promise message from each of the nodes in its list of live nodes.

Once a node (e.g. 110) has received a request from a client (or a request passed from another node) and that node believes it is the leader node, that node will then transmit accept messages and update information to other nodes in the plurality of nodes, in response to the received request (step 406).

The accept messages are sent in order to request that the write to the data item requested by the client be stored by the other nodes. As in the Multi-Paxos algorithm summarised above the accept messages will include a new processing instance number *J* that relates to this update, as well as the update value *U* and the leadership round number *L* currently used by leader node 110.

As indicated above, update information is transmitted to each of the other nodes in the plurality of nodes in conjunction with the accept messages. The update information transmitted by the leader node 110 is at least partially derived from the update information 224 which it has stored in its non-volatile storage 206. The update information 224 stored by the leader node 110 includes a list of the processing instance numbers of updates that have been initiated, a list of the processing instance numbers of updates that have been marked as agreed by the leader node 110 (or other leader nodes before it), and for each other node in the plurality of nodes, a list of the processing instance numbers of updates that leader node 110 believes that other node has accepted.

As well as transmitting the accept messages, the leader node 110 will modify the list of the processing instance numbers of updates that have been initiated in its update information 224 to indicate that processing instance number *J* has been initiated.

Each of the nodes receiving an accept message and corresponding update information, which are named follower nodes below, then performs steps 408 to 414.

Upon receipt of an accept message and corresponding update information from leader node 110, a follower node (e.g. 120) will first check that it believes that node 110 is still the leader node, by checking that no prepare message that included a leadership round number greater than *L* has been received by the follower node 120 (step 408).

If the follower node 120 receiving an accept message from the leader node 110 believes that node 110 is still the leader node, it will temporarily write the updated value in the accept message to storage 122 together with the processing instance number *J* for that updated value (step 410).

The follower node 120 will then process the update information received from the leader node 110 in order to decide whether updated values temporarily held in the follower node's storage 122 may be permanently committed to the data items in its non-volatile storage (step 412).

If the update information received from the leader node 110 indicates that an updated value temporarily held in storage 122 at the follower node 120 has been marked as agreed by the leader node 110, and that the follower node 120 has accepted the updated value, the follower node 120 will permanently commit that updated value to the corresponding data item in its non-volatile storage.

A follower node must be told by update information sent by a leader node whether or not it has accepted an updated value because in situations where the leader node changes a follower node may receive multiple accept messages with the same processing instance number, but with different leadership round numbers and update values. In such situations the leader node is the only node in a position to judge when a follower node has accepted the agreed update value for a particular processing instance number.

The follower node 120 will then send an accepted message to the leader node 110 confirming that it is prepared to accept the updated value for processing instance number *J* (step 414).

The leader node 110 then receives the accepted messages sent from the follower nodes (step 416). The leader node 110 will check whether it has received an accepted message in relation to the update for processing instance number *J* from a quorum of the plurality of nodes (step 418).

If the leader node 110 detects that it has received an accepted message in relation to the update from a quorum of the plurality of nodes, the leader node 110 permanently stores the update for the data item in non-volatile storage 206 and marks the update for processing instance number *J* as agreed in its update information 224, i.e. it marks the update as agreed in its list of the processing instance numbers of updates that have been marked as agreed (step 422). The leader node 110 may also transmit a message to the other nodes in the plurality of nodes to indicate that the update has been marked as agreed, in order to indicate to the other nodes that have accepted the update that the update should be permanently stored in non-volatile storage.

If the leader node 110 detects that it has not received an accepted message in relation to the update for processing instance number *J* from a quorum of the plurality of nodes, the leader node 110 will check whether it has received an accepted message in relation to the update from at least the nodes in the leader node's list of live nodes 226 (step 414).

If it has, the leader node 110 will perform step 422, i.e. permanently store the update for the data item in non-volatile storage 206 and mark the update for processing instance number *J* as agreed in its update information 224. The leader node 110 may also transmit a message to the other nodes in the plurality of nodes to indicate that the update has been marked as agreed, in order to indicate to the other nodes that have accepted the update that the update should be permanently stored in non-volatile storage.

Otherwise, the leader node 110 will not store the update to the data item, but will mark the update for processing instance number *J* as failed in its update information 224 and transmit a failure message to the client from which the write request was received, the failure message indicating that the node was not able to process the write request. In response to receiving the failure message the client may then try to process the write by transmitting a write request to a different node of the distributed storage system 100. In an alternative arrangement the leader node 110 may retry sending accept messages to live nodes before failing a write request.

By allowing updates to be accepted once agreed by the nodes in the leader node's list of live nodes 226 (rather than once agreed by a quorum of more than half of the plurality of nodes), the present invention allows write requests from clients to be processed by a leader node even when a quorum of the plurality of nodes may not be contacted by that leader node.

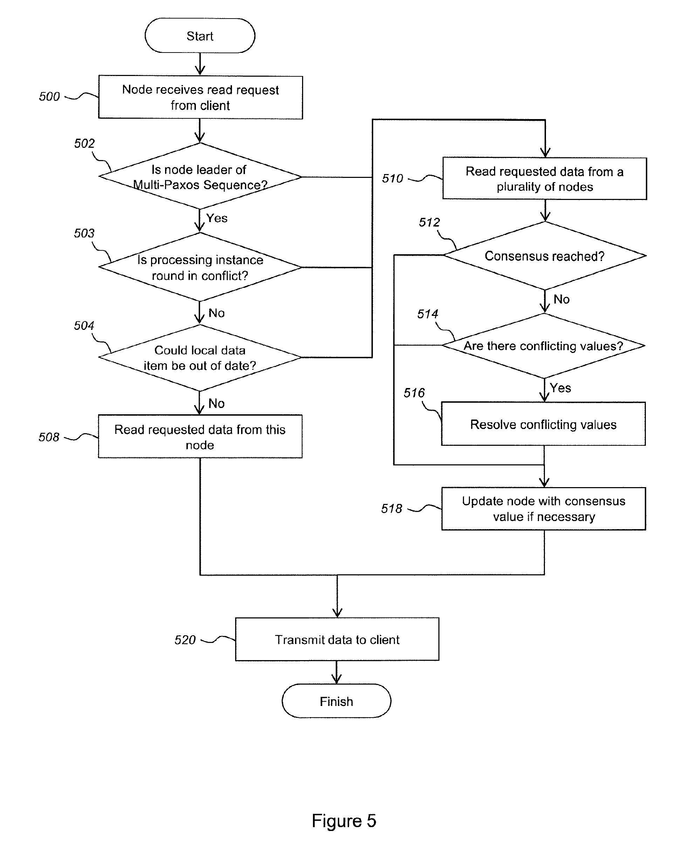

Figure 5 illustrates the steps performed by a node (e.g. 110) of the distributed storage system 100 in order to read a data item in response to a request from a client (e.g. 150), according to an embodiment of the present invention.

Initially the node 110 receives a request from a client 150 to read a data item (step 500). Each request issued to the distributed storage system 100 relates to one of the plurality of data items stored by the system, so the request therefore includes an indication of the data item to be read. This indication may be in the form of a file name or a unique identifier that identifies the data item to the distributed storage system 100.

In response to receiving the request, the node 110 will select, according to at least one detected characteristic of system status of the distributed storage system 100, which of a first and a second reading mode to use in the retrieval of the data item. The node 110 may perform steps 502 to 504 in order to detect one or more characteristics of system status of the distributed storage system 100, and will select to use the first reading mode (described in steps 510 to 518) if it detects from those characteristics of system status that there is a lower likelihood of data item consistency, or the second reading mode (described in step 508) if it detects from those characteristics of system status that there is a higher likelihood of data item consistency.

The node 110 will first detect a leadership issue characteristic that indicates whether or not the node 100 believes it is currently a leader node (step 502). The node 110 may believe it is a leader node according to the same method for doing so described above, i.e. in step 402 which is performed in response to receiving a request to write a data item. If the node 110 believes it is still the leader node then it is still responsible for controlling updates to the data item at the nodes for which it is the leader node, and a higher likelihood of data item consistency may be detected as a result (provided that steps 503 and 504 are also satisfied).

If node 110 does believe that it is a leader node, the leader node 100 will detect an agreement issue characteristic that indicates whether or not the most recent update processed for the data item has been agreed, i.e. whether the processing instance number for that update is marked as agreed in the node's 110 update information (step 503).

If the most recent update processed for the data item has been marked as agreed, the leader node 110 knows that there are no pending updates with the same processing instance number as the most recent update that have been proposed by other nodes (e.g. that are attempting to become leader) and that could result in a conflict in the value of the data item. If there are no such updates a higher likelihood of data item consistency may be detected as a result (provided that step 504 is also satisfied).

If the most recent update processed for the data item has been marked as agreed, the leader node 110 will detect an out-of-date characteristic for the data item that indicates whether any information has been received that may indicate that the data item it has stored in non-volatile storage 206 may be out of date (step 504).

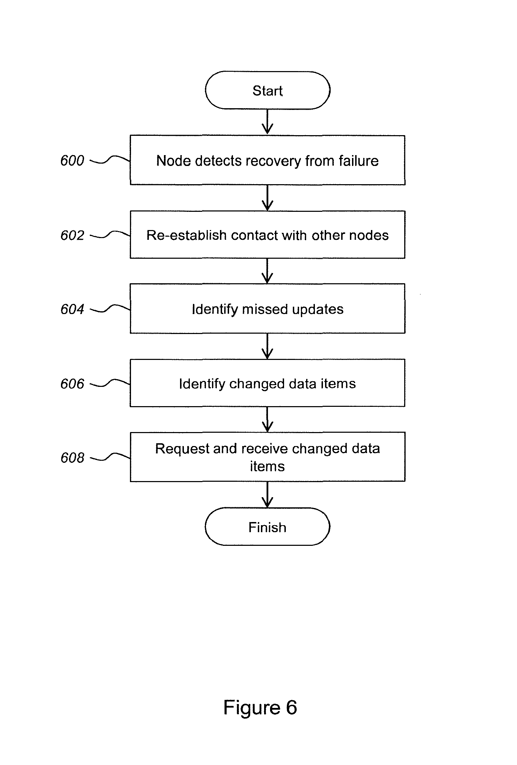

The leader node 110 may monitor for information indicating that data items it has stored may be out of date. The information that is monitored includes whether the leader node is in a recently-failed state i.e. whether it has failed and subsequently recovered but not yet re-synchronised data items with the other live contactable nodes (using the method of Figure 6 described below), whether the leader node 110 has been unable to contact one or more nodes and has since re-gained a connection with those nodes, or whether the leader node 110 has received a message from another node indicating that an update relating to the data item has completed unexpectedly such as a message indicating that an update unknown to the leader node 110 has been agreed by other nodes.

If the leader node 110 does not detect information that may indicate that the data item it has stored may be out of date, a higher likelihood of data item consistency is detected (as step 502 and 503 have also been satisfied).

The leader node 110 thus uses the second read mode to service the read request by reading the data item stored locally in its non-volatile storage 206 (step 508). The leader node 110 may use the data item stored locally in its non-volatile storage as in the majority of cases the data item stored locally will be up-to-date. The small number of cases where the leader node 110 may service the read request from its local store when the data item it has stored is not up-to-date are described in detail below.

If in any of steps 502, 503 or 504 above the node 110 detected that it does not believe it is the current leader node (i.e. step 502), the data item has not been marked as agreed (i.e. step 503), or that it has received information that may indicate that the data item it has stored in non-volatile storage 206 may be out of date (i.e. step 504), a lower likelihood of data item consistency is detected and the node 110 will use the first read mode to read the data item in steps 510 to 514.

In the first read mode the node 110 will first attempt to service the read request by reading the requested data item from a quorum of the plurality of nodes (step 510).

In order to read the requested data item from a quorum of the plurality of nodes, the node 110 will transmit a read message to each of the other nodes in the plurality of nodes, and receive responses to those read messages, as in the Multi-Paxos algorithm (summarised in steps 342 to 346 above).

The node 110 will then determine whether a quorum of the responses received in response to the read requests transmitted in step 510 indicate a consensus on the value of the data item (step 512).

If a quorum of the plurality of nodes agrees on the value of the data item, the node 110 will use that value of the data item to service the read request and as the current value of the data item. The node 110 will update the data item it has stored locally in non-volatile storage 206 with this current value of the data item if the value stored locally did not agree with that of the quorum of the plurality of nodes (step 518).

If a quorum of the plurality of nodes does not agree on the value of the data item in step 512, for example because a quorum of the plurality of nodes cannot currently be contacted by the node 110, or because there are two or more conflicting changes to the data item that have not been resolved, the node 110 will determine if the values returned in the responses it receives agree on the value of the data item (step 514).

If they do, the node 110 will use that value of the data item to service the read request and as the current value of the data item. The node 110 will update the data item it has stored locally in non-volatile storage 206 with this current value of the data item if the value stored locally did not agree the agreed value (step 518).

If in step 514 the node 110 determines that the values returned in the responses it receives do not agree on the value of the data item, the node 110 may attempt to resolve the conflicting values by selecting one of the conflicting values as the value of the data item to be used to service the read request and as the current value of the data item (step 516). The node 110 may also send accept messages to the other nodes in the plurality of nodes, where the accept messages contain the selected conflicting value, in order to resolve the conflict on the value of the data item in the plurality of nodes.

Once the node 110 has determined the value of the data item to use to service the read request in the steps above, the node will transmit that value to the client in response to the read request (step 520).

The present invention thus allows almost all reads of the distributed storage system to be serviced by reading from the local storage of a leader node, whilst ensuring that the writes to the distributed storage system remain efficient.

As described above, node failures and communications network partitions may result in nodes storing out-of-date or inconsistent data items in their local storage. The read method of Figure 5 may repair some of these data items by resolving conflicting values for data items (in step 516) and updating nodes with values from quorum reads (in step 518), however multiple sequential failures may result in the loss of updates to infrequently accessed data items if using the repair features of the read method alone.

The present invention therefore includes a method for re-synchronising data items in a node following a failure, and a method for determining when a node may safely participate in read and write actions for a data item following a failure, as is described in greater detail below.

Figure 6 illustrates the steps performed by a node (e.g. 110) of the distributed storage system 100 in order to re-synchronise the data items it stores in local storage following a failure, according to an embodiment of the present invention.

Initially, a recovering node (e.g. 110) detects that there has been a recovery from a failure (step 600). The failure may be a failure of the recovering node 110, which the recovering node 110 may detect if its operating system 218 and/or storage software 220 restarts. The failure may additionally or alternatively be a failure of a communications network (or networks) 140 which has caused the recovering node 110 to be disconnected from one or more of the plurality of nodes in the distributed storage system 100, which may be detected by the recovering node 110 using the node's 110 list of live nodes 226.

In response to detecting the failure, a recovering node 110 will attempt to re-establish contact with the other nodes (step 602).

If the failure is a communications network failure (and the recovering node 110 itself has not failed and restarted) the recovering node 110 can reconnect to the other nodes and immediately resume processing read and write commands.

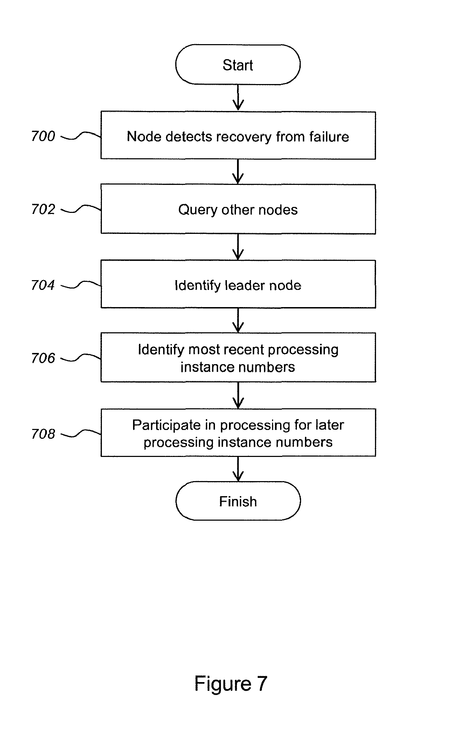

If the recovering node 110 has failed and restarted it may have lost information about Paxos processing instances that were in progress when it failed (as these may be stored in RAM 208). If it resumed processing Paxos instances immediately it may renege on earlier promise or accepted messages it sent prior to the failure, which could result in data becoming permanently inconsistent. Instead the recovering node 110 must therefore first establish when it is safe to resume processing Paxos instances using the procedure specified in Figure 7 and described later.

Once the recovering node 110 has reconnected to the other nodes, the recovering node 110 requests that one or more of the other nodes transmit to the recovering node 110 their current update information. The recovering node 110 then identifies from the received update information the Paxos processing instance numbers of updates the recovering node 110 missed while it was failed and/or disconnected (step 604).

The recovering node 110 will then use this list of missed Paxos processing instance numbers to request from the other nodes the identifiers of the data items that were changed by the updates associated with the missed Paxos processing instance numbers (step 606), and it will then request to receive the updated values of the determined data items from the leader node and/or from nodes the received update information indicates have accepted the identified updates (step 608). As a result, the recovering node 110 can ensure consistency with those nodes that have agreed the identified updates with the leader node.

During re-synchronisation according to the steps of Figure 6 the recovering node 110 may receive read requests from clients and/or read messages (for quorum reads) from other nodes. In response to these messages, the recovering node 110 initially acts as if all read requests/read messages are for potentially inconsistent data, and so reports itself as inconsistent to clients/other nodes. In response to receiving a message indicating inconsistency of a recovering node, clients will re-transmit their read requests to other nodes that are consistent. In response to receiving a message indicating inconsistency of a recovering node, other nodes will ignore the recovering node for the purposes of quorum reads (i.e. the recovering node will be treated as if it cannot provide a response due to a failure). Once the recovering node 110 knows which data items need repair it reports itself as consistent to clients/other nodes and reverts to normal read processing.

By using the re-synchronisation method of Figure 6 a node may re-synchronise the data items in its local store with those of other nodes in order to correct data inconsistencies due to failure, without needing to monitor for other messages relating to updates to the data item (e.g. accept messages) transmitted between nodes in the distributed storage system 100. In this way the consistency of data items that are rarely updated may be maintained.

As described above, a node which has failed and restarted must also determine when it may continue participating with other nodes in order to service read and write requests sent to the distributed storage system 100. Figure 7 illustrates the steps performed by a node (e.g. 110) of the distributed storage system 100 in order to determine when it has re-synchronised with other nodes and can thus service reads and writes in relation to a data item following a failure, according to the present invention.

Initially, a recovering node (e.g. 110) detects that there has been a recovery from a failure (step 700). This may be done in the same way as described above for step 600 of Figure 6, except that the remaining steps of Figure 7 need only be performed if the recovering node 110 has failed and restarted (i.e. and not if it has only been disconnected from one or more other nodes).

In response to detecting the failure and restart of the recovering node 110, the recovering node 110 will reconnect to the other nodes and send query messages to each other node (step 702). In response to these query messages, each other node sends a response containing an indication of whether the node is a leader node (and if so its current leadership round number), the highest leadership round number the node has received from any leader node, and the highest processing instance number the node has sent or received in an accept or accepted message.

The recovering node 110 then uses the information in the received responses to identify a unique leader node (step 704), for example by using the leadership round numbers to check that the leader node and/or a quorum of the plurality of nodes believe that the leader node is the leader node of at least a quorum of the plurality of nodes. If there is no unique leader node the recovering node 110 periodically resends the query messages of step 702 and receives responses from the other nodes until a unique leader node is established.

Once the recovering node 110 has identified the current leader node in step 704, the recovering node 110 may then determine a point in the sequence of updates being coordinated by the current leader node (step 706). This point may be the highest processing instance number indicated by the leader node in its response to the recovering node's query message.

The recovering node 110 may then safely participate in all update commands beyond the determined point, i.e. in all update commands with a processing instance number greater than the highest processing instance number indicated by the leader node in its response to the recovering node's query message (step 708).

By actively identifying and querying the leader node according to the above method a recovering node is able to quickly determine when it may continue participating with other nodes in servicing read and write requests, without needing to wait for stabilisation of older (such as promise and/or accept messages) transmitted between nodes in the distributed storage system 100.

Using the re-synchronisation methods of Figures 6 and 7 the present invention may recover from data item inconsistencies that the read and write algorithms cannot handle alone.

The combination of the read and write algorithms and the re-synchronisation methods additionally allow the distributed storage system of the present invention to service requests under circumstances that would, in other algorithms that guarantee consistency, prevent a distributed storage system from servicing any requests.

The present invention avoids data inconsistencies in many failure cases, however it cannot guarantee data consistency in some rare situations that are described below.

The majority of node failures will not result in clients reading inconsistent data because a failed and recovering node is aware that its local store may contain inconsistent data and so avoids using this data in response to client requests until it has re-synchronized with other nodes in the system (using the methods of Figures 6 and 7).

Some multiple node failure sequences can result in data inconsistency however. In particular, if a recovering node cannot communicate with any nodes that it can resynchronize with it has no choice but to satisfy any client read requests it receives with data from its local store. For example, consider a distributed storage system 100 with three data nodes A, B and C that store a data item. If node C fails, nodes A and B can continue handling updates to the data item. If nodes A and B then fail and then node C recovers (or node C recovers but nodes A and B fail before node C can re-synchronise its data with them), node C will have to respond to read requests with its old copy of the data.

Partitions in the plurality of nodes of the distributed storage system 100, for example where a communications network failure divides the plurality of nodes into two or more subsets that are unable to communicate with each other, can result in temporary data inconsistencies.

For example, a plurality of nodes may be partitioned by a communications network failure, causing read and write requests to be processed independently in two or more subsets of the pluralities of nodes. In this case the subsets will operate as separate distributed storage systems and so writes initiated by clients connected to one subset will not be visible to clients connected to other subsets. Clients connected to different partitions may thus request conflicting updates to the same data items whilst the partition persists. Once the partition is fixed however any data conflicts will be resolved during quorum reads of the data items in step 516 and in the re-synchronization methods described in Figures 6 and 7.

Another example is where a leader node is briefly partitioned from other nodes for long enough for the node to miss an update initiated by a replacement leader node set up amongst the other nodes, but not long enough for the leader node to detect that it is no longer able to communicate with the other nodes. In this case, a client may send a read request to the leader node whilst it is partitioned and be given out-of-date data by the leader node, as the leader node does not know that the data item stored in its local storage may be out-of-date. Once the partition is repaired the partitioned leader node will realise that a partition has occurred, either because it receives messages from other nodes (e.g. that comprise lists of live nodes, or changes to the same) indicating that it was partitioned, or because it will begin to receive promise and/or accept messages from newer leader nodes. In response the partitioned leader node will start the re-synchronisation methods of Figures 6 and 7.

The above embodiments are to be understood as illustrative examples of the invention. Further embodiments of the invention are envisaged as described below.

An alternative embodiment of the present invention is envisaged where the distributed storage system 100 is comprised of a set of pluralities of nodes. Each respective plurality of nodes in that set may operate according to the present invention as described above, and may store a different plurality of data items to the other pluralities of nodes in the set. A distributed hash table or some other deterministic partitioning algorithm may be used in the distributed storage system 100 (e.g. by the nodes in all the pluralities of nodes) in order to map each data item identifier transmitted in client requests to the plurality of nodes that stores the corresponding data item so that that plurality of nodes can service the request for that item. In this way the data items stored by the distributed storage system 100, and access to those items, are distributed across the pluralities of nodes. Each node in the distributed storage system 100 may be a member of more than one of the pluralities of nodes, and may thus participate in servicing requests for different sets of data items.

The plurality of clients (e.g. 150, 160) that transmit read and write requests to the distributed storage system 100 may in an alternative arrangement provide a more complex storage system that uses the distributed storage system to provide consistent data with high levels of availability. The clients may for example be configured to provide a database or a file system to other computing devices, where the data items in that database or distributed file system are stored using the distributed storage system 100.

In an alternative arrangement a node 110 may use the second read mode to service a read for a data item if the most recent processing instance number for the most recent update to that data item is not marked as agreed in the node's 110 update information (which is detected in step 503), provided the node 110 detects that the following conditions are met. Firstly, the node 110 must be processing the most recent update to the data item, and no other nodes must be processing an update to the data item with the same processing instance number. Secondly, the node 110 must detect that the data item it has stored in non-volatile storage is not out of date in step 504. If both of these conditions are satisfied, then the node 110 will delay servicing the read request using the second read mode (i.e. in step 508) until it detects that the most recent update to that data item is marked as agreed in the node's 110 update information. If whilst delaying the servicing of the read request using the second read mode the node 110 detects that another node has proposed an update with the same processing instance number as the most recent update, the node 110 will instead use the first read mode to service the read request (i.e. by following steps 510 to 518).

The node 110 may then detect whether the most recent update processed for the data item has been agreed, i.e. whether the processing instance number for the update is marked as agreed in the node's 110 update information. If the most recent update processed for the data item has not been agreed, the leader node 110 will wait until the update has been marked as agreed before allowing the read request to complete processing (step 506).

In an alternative arrangement the distributed storage system 100 may also provide a conditional write method. The conditional write method allows a client (e.g. 150) to provide an expected old value and an update value in a conditional write request transmitted to the distributed storage system 100, which will only store the update value to the identified data item if the current consensus value of the data item is equal to the expected old value provided by the client.

To process a conditional write, the node that receives the conditional write request first reads the data item using the method of Figure 5 and compares it to the expected old value supplied by the client. If the comparison indicates that the conditional write should proceed, the updated value is written by the node using the write method of Figure 4.

A conditional write may complete even when the node fails at an arbitrary points while writing the update using the method of Figure 4. The client (e.g. 150) will time out following the failure and in response re-transmit the conditional write request to another node in the distributed storage system 100 which then attempts to become the leader node. In doing this, the new leader node either detects that the update has already been fully or partially applied (and so completes the update), or that the update has not been applied and that the old value is still available to check against the client's expected old value.

In an alternative arrangement, a node (e.g. 110) may not attempt to resolve conflicting values returned by a quorum read for a data item in step 516 of the read method shown in Figure 5. Instead, the node 110 will use all of the conflicting values of the data item to service the read request, i.e. all of the conflicting values will be transmitted to the client in step 520 of Figure 5. It is then up to the client (e.g. 150) to select which of the conflicting values to use, and to transmit a write request to the distributed storage system 100 in order to correct the inconsistency.

In an alternative arrangement, each update processed by the distributed storage system 100 in response to a request from a client may relate to one or more data items stored by the distributed storage system 100.

In the above embodiments, the efficient (second) read mode, used when the system is determined to be in a relatively consistent state, involves reading from only a single node. However, it is envisaged that in alternative embodiments, it may involve reading from only two, or perhaps more, nodes; providing this is less than the number of nodes that are read in the other (first) read mode, so that the second read mode may provide an improvement in performance over the first read mode.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method for providing access to data items from a distributed storage system comprising multiple storage nodes connected via a data communications network, each said data item being replicated across a plurality of said storage nodes,
wherein the method comprises reading data items from said distributed storage system by selecting between a first and a second reading mode, said first reading mode comprising attempting to read the data item from a set of nodes comprising a plurality of said storage nodes to check for data item consistency across at least a quorum of said set of nodes and said second reading mode comprising reading the data item from at least one of said storage nodes, the method comprising:
receiving a request to retrieve the data item at a given node;
selecting, according to at least one detected characteristic of system status of the distributed storage system, which of the first and second reading modes to use in the retrieval of the data item, wherein said selection comprises selecting the second reading mode when the at least one detected characteristic of system status indicates a higher likelihood of data item consistency, and selecting the first reading mode when the at least one detected characteristic of system status indicates a lower likelihood of data item consistency;
reading the data item from the distributed storage system using the selected reading mode; and
transmitting the data item read by the selected reading mode in response to said request to retrieve the data item.

2. A method according to claim 1, wherein the first reading mode comprises reading the data item from a first number of the plurality of nodes, wherein the second reading mode comprises reading the data item from a second number of the plurality of nodes, and wherein said second number is less than said first number.

3. A method according to claim 1 or 2, wherein the second reading mode comprises reading the data item from only one of the plurality of nodes.

4. A method according to any preceding claim, wherein the selection of the reading mode is performed by the given node in response to the receipt of the request to retrieve the data item, in accordance with a current system status indicated by said at least one detected characteristic of system status.

5. A method according to any preceding claim, wherein said quorum comprises more than half of said set of nodes.

6. A method according to claim 4 or 5, comprising updating the data item stored at one or more of the plurality of nodes using the data item read from said quorum of the plurality of nodes.

7. A method according to any preceding claim, comprising:
requesting messages from a plurality of said set of nodes, indicating agreement to a write command for said data item;
detecting an agreement issue characteristic indicating that said data item write command has not yet been agreed by set of nodes;
including said agreement issue characteristic in said at least one detected characteristic of system status of the distributed storage system.

8. A method according to any preceding claim, comprising:
monitoring for an indication that a locally-stored data item may be out of date at said given node;
detecting an out-of-date characteristic indicating that said locally-stored data item may not be a latest version of the data item;
including said out-of-date characteristic in said at least one detected characteristic of system status of the distributed storage system.

9. A method according to any preceding claim, comprising:
allocating a current leader node for said set of nodes;
detecting a leadership issue characteristic indicating that said given node is not the current leader for said set of nodes;
including said leadership issue characteristic in said at least one detected characteristic of system status of the distributed storage system.

10. A method according to claim 9, comprising, at said given node:
assuming responsibility for controlling updates to the data item stored at each member of the set of nodes in response to receipt at the given node of an acknowledgement message from at least one of the other nodes in the set of nodes; and
detecting said leadership issue characteristic from a leadership configuration message received at the given node, which leadership configuration message indicates that a subsequent change in the responsibility for controlling updates has occurred.

11. A method according to any of claims 8 to 10, wherein said monitoring includes monitoring whether said given node is in a recently-failed state.

12. A method according any of claims 8 to 11, wherein said monitoring includes monitoring whether said given node has been unable to make contact with one or more other nodes in said set of nodes.

13. A method for providing backup access to data items from a storage node of a distributed storage system comprising multiple storage nodes connected via a data communications network, each said data item being replicated across a plurality of said storage nodes,
wherein the method comprises:
detecting that said storage node has been disconnected from other storage nodes in a set of nodes, comprising a plurality of said storage nodes, across which data items have been replicated;
querying one or more members of said set of storage nodes to identify a current leader node which is responsible for coordinating updates to said set of nodes;
determining one or more data items in relation to which said storage node may have missed an update to said set of nodes; and
in response to said determination, to query one or more of said set of nodes to update a locally-stored data item to ensure consistency of said locally-stored data item with at least a quorum of said set of nodes.

14. A method according to claim 13, wherein said determining one or more data items in relation to which said storage node may have missed an update to said set of nodes comprises identifying one or more data items in relation to which said leader node has not confirmed completion of a replication action.

15. A method for providing backup access to data items from a storage node of a distributed storage system comprising multiple storage nodes connected via a data communications network, each said data item being replicated across a plurality of said storage nodes,
wherein the method comprises:
detecting that the storage node has failed and restarted;
querying one or more members of said set of storage nodes to identify a current leader node which is responsible for coordinating updates to said set of nodes;
determining an identifier of a point in a sequence of distributed storage system actions being coordinated by said current leader node, and participating in read and/or write actions instructed by said leader node which are beyond said point in said sequence.
